(19) Europäisches Patentamt
European Patent Office
Office européen des brevets

(11) EP 2 552 850 B1

(12) FASCICULE DE BREVET EUROPEEN

(45) Date de publication et mention de la délivrance du brevet:
**21.05.2014 Bulletin 2014/21**

(21) Numéro de dépôt: **11719311.0**

(22) Date de dépôt: **29.03.2011**

(51) Int Cl.:
***C04B 20/02*** (2006.01)
***C04B 24/26*** (2006.01)
***C04B 28/02*** (2006.01)
***C04B 14/10*** (2006.01)
***C04B 24/24*** (2006.01)

(86) Numéro de dépôt international:
**PCT/FR2011/050694**

(87) Numéro de publication internationale:
**WO 2011/121230 (06.10.2011 Gazette 2011/40)**

# (54) MELANGE FLUIDIFIANT POUR COMPOSITION HYDRAULIQUE

FLUIDISIERUNGSGEMISCH FÜR EINE HYDRAULISCHE ZUSAMMENSETZUNG

FLUIDIZING MIXTURE FOR A HYDRAULIC COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2010 FR 1052501**

(43) Date de publication de la demande:
**06.02.2013 Bulletin 2013/06**

(73) Titulaire: **Lafarge**
**75116 Paris (FR)**

(72) Inventeurs:
- **VILLARD, Emmanuel**
**F-42320 Saint-Christo-en-Jarez (FR)**
- **MOSQUET, Martin**
**F-38300 Bourgoin-Jallieu (FR)**
- **RINALDI, David**
**F-69003 Lyon (FR)**
- **NARANJO, Horacio**
**F-38200 Jardin (FR)**
- **LAYE, Jean-Michel**
**Chennai 60041 (IN)**

(74) Mandataire: **Berruet, Laure**
**LAFARGE**
**Département Propriété Intellectuelle (DPI)**
**95, Rue du Montmurier - BP9**
**38291 Saint Quentin Fallavier Cedex (FR)**

(56) Documents cités:
**WO-A1-98/58887**
**WO-A1-2010/005117**
**WO-A2-2006/032785**
**WO-A2-2006/032786**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 552 850 B1

Printed by Jouve, 75001 PARIS (FR)

## Description

La présente invention se rapporte à un mélange fluidifiant pour des compositions comprenant un liant hydraulique, par exemple du béton.

Lorsque les composants du béton, liant hydraulique, granulats fins et grossiers, sont gâchés avec de l'eau, on obtient une composition qui fait prise et durcit par suite de réactions et de processus d'hydratation, et qui après durcissement, conserve sa résistance et sa stabilité même sous l'eau. Avant la prise, le béton peut être travaillé pendant une durée limitée, appelée généralement fenêtre d'ouvrabilité. La fenêtre d'ouvrabilité peut être définie comme étant la durée pendant laquelle l'étalement ou l'affaissement de la composition cimentaire est supérieur à une valeur donnée.

Une difficulté à prendre en compte lors de la réalisation d'un béton correspond à la quantité d'eau de gâchée à utiliser. En effet, la quantité d'eau de gâchée doit être suffisante pour pouvoir travailler convenablement le béton. Toutefois, une augmentation de la quantité d'eau de gâchée tend à réduire la résistance en compression du béton obtenue après durcissement.

Pour obtenir un béton ayant une fluidité satisfaisante pendant la fenêtre d'ouvrabilité sans utiliser une quantité excessive d'eau, le béton peut comprendre un mélange de plusieurs adjuvants appelés fluidifiants, réducteurs d'eau, plastifiants ou superplastifiants.

Il peut être difficile de fabriquer des compositions hydrauliques ayant des propriétés constantes. La qualité des matières premières est souvent à l'origine de ces variations. En particulier, il a été constaté que les impuretés, par exemple les argiles, contenues dans les sables et/ou les additions minérales peuvent générer des fluctuations de propriétés des compositions hydrauliques, notamment une diminution de la fenêtre d'ouvrabilité des compositions hydrauliques.

La présente invention se rapporte à un mélange fluidifiant pour la préparation d'une composition hydraulique qui est utile pour réduire les effets indésirables liés à la présence d'impuretés nocives, par exemple les argiles, dans la composition hydraulique.

Dans ce but, la présente invention propose un mélange pour composition hydraulique, comprenant:

- un agent inertant adapté à neutraliser au moins partiellement les effets nocifs d'impuretés de la composition hydraulique sur l'ouvrabilité de la composition hydraulique ;
- un premier superplastifiant différent de l'agent inertant ; et
- un second superplastifiant différent du premier superplastifiant et de l'agent inertant et ayant une action fluidifiante maximale à 20°C se produisant après l'action fluidifiante maximale à 20°C du premier superplastifiant.

La présente invention permet avantageusement la fabrication de compositions hydrauliques faciles à utiliser. Ces compositions hydrauliques ont une rhéologie adaptée, correspondant préférentiellement à une durée d'ouvrabilité (après gâchage) d'une heure minimum.

En outre, le mélange fluidifiant peut être réalisé à coût réduit puisque le coût d'un agent inertant est généralement inférieur au coût d'un superplastifiant.

En outre, l'agent inertant peut avantageusement être choisi pour n'avoir peu d'action fluidifiante ou n'avoir pas d'action fluidifiante de façon que chaque composant du mélange exerce essentiellement une seule fonction (fonction d'inertage pour l'agent inertant et fonction fluidifiante pour les premier et second superplastifiants). La détermination des proportions de chaque composant du mélange est ainsi facilitée.

Enfin l'invention a pour avantage de pouvoir être mise en oeuvre dans l'une des industries parmi l'industrie du bâtiment, l'industrie chimique (adjuvantiers), dans les marchés de la construction (bâtiment, génie civil, routes ou usine de préfabrication), dans l'industrie cimentière ou les centrales à béton.

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique selon l'invention peut en particulier être un ciment, du plâtre ou de la chaux. De préférence, le liant hydraulique selon l'invention comprend un ciment et des adjuvants.

Par l'expression « composition hydraulique », on entend selon la présente invention un mélange d'un liant hydraulique, avec de l'eau (dite eau de gâchage), éventuellement des granulats, éventuellement des adjuvants, et éventuellement des additions minérales. Une composition hydraulique peut par exemple être un béton hautes performances, un béton très hautes performances, un béton auto-plaçant, un béton auto-nivelant, un béton auto-compactant, un béton fibré, un béton prêt à l'emploi ou un béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers ; dans ce cas précis le béton comprend un mélange d'un liant hydraulique, de sable, d'eau, éventuellement d'adjuvants et éventuellement

d'additions minérales. Le terme « béton » selon l'invention désigne indistinctement le béton frais ou le béton durci. De préférence, la composition hydraulique selon l'invention est un coulis de ciment, un mortier, un béton, une pâte de plâtre ou un coulis de chaux. Préférentiellement, la composition hydraulique selon l'invention est un coulis de ciment, un mortier ou un béton. La composition hydraulique selon l'invention peut être utilisée directement sur chantier à l'état frais et coulée dans un coffrage adapté à l'application visée, ou en usine de préfabrication, ou en tant qu'enduit sur un support solide.

Par l'expression « ciment Portland », on entend selon l'invention un ciment de type CEM I, CEM II, CEM III, CEM IV ou CEM V selon la norme « Ciment » NF EN 197-1.

Par le terme « prise », on entend selon la présente invention le passage à l'état solide d'un liant hydraulique par réaction chimique d'hydratation. La prise est généralement suivie par la période de durcissement.

Par le terme « durcissement », on entend selon la présente invention l'acquisition des propriétés mécaniques d'un liant hydraulique, après la fin de la prise.

Par l'expression « élément pour le domaine de la construction », on entend selon la présente invention tout élément constitutif d'une construction comme par exemple un sol, une chape, une fondation, un mur, une cloison, un plafond, une poutre, un plan de travail, un pilier, une pile de pont, un parpaing, une canalisation, un poteau, une corniche, un élément de voirie (par exemple une bordure de trottoir), une tuile, un revêtement (par exemple de route), un enduit de jointement (par exemple de mur), une plaque de plâtre, un élément isolant (acoustique et/ou thermique).

Par le terme « argiles », on entend selon la présente invention des silicates d'aluminium et/ou de magnésium, notamment les phyllosilicates à structure en feuillets, typiquement espacés d'environ 7 à environ 14 Angströms. Les argiles rencontrées fréquemment dans les sables sont par exemple la montmorillonite, l'illite, la kaolinite, la muscovite et les chlorites. Les argiles peuvent être de type 2 : 1 mais aussi de type 1 : 1 (kaolinite) ou 2 : 1 : 1 (chlorites).

Par le terme « argiles gonflantes », on entend selon la présente invention les argiles qui possèdent des cations, dans leurs espaces inter-feuillets, capables de s'hydrater en présence d'eau (vapeur ou liquide). Les argiles gonflantes, appelées de façon générique smectites, comprennent notamment des argiles de type 2:1, par exemple la montmorillonite.

Par le terme « argiles non gonflantes », on entend selon la présente invention les argiles dont l'espace inter-feuillet n'augmente pas en présence d'eau. Les argiles non gonflantes comprennent notamment les argiles de type 1 : 1 (notamment la kaolinite) ou de type 2:1:1 (notamment les chlorites).

Par le terme « inertage d'argile », on entend selon la présente invention la neutralisation au moins partielle des effets nocifs dus à la présence de l'argile dans une composition hydraulique, notamment une composition hydraulique comprenant un superplastifiant.

Par « liaison hydrogène » ou « pont hydrogène », on entend selon la présente invention une liaison physique non covalente, de type dipôle-dipôle, de basse intensité (vingt fois plus faible qu'une liaison covalente classique), et reliant des molécules et qui comprend un atome d'hydrogène. Elle requiert un donneur de liaison hydrogène et un accepteur de liaison hydrogène. Le donneur est un composé à hydrogène acide, c'est-à-dire comprenant au moins un hétéroatome (par exemple de l'azote, de l'oxygène, ou du soufre) porteur d'un atome hydrogène (par exemple dans les amines, les alcools ou les thiols). L'accepteur est composé d'au moins un hétéroatome (uniquement de l'azote, de l'oxygène ou du soufre) porteur de doublets libres.

Par « atome capable de former une liaison hydrogène », on entend selon la présente invention un atome d'hydrogène ou un atome électronégatif, par exemple l'azote, l'oxygène ou le soufre, de la molécule organique selon l'invention capable de former au moins une liaison hydrogène.

Par l'expression « plastifiant/réducteur d'eau », on entend selon la présente invention un adjuvant qui, sans modifier la consistance, permet de réduire la teneur en eau d'un béton donné, ou qui, sans modifier la teneur en eau, en augmente l'affaissement/l'étalement, ou qui produit les deux effets en même temps. La norme EN 934-2 prévoit que la réduction d'eau doit être supérieure à 5 %. Les réducteurs d'eau peuvent, par exemple, être à base d'acides lignosulfoniques, d'acides hydroxycarboxyliques ou d'hydrates de carbone traités.

Par l'expression « superplastifiant » ou « superfluidifiant » ou « super réducteur d'eau », on entend selon la présente invention un réducteur d'eau qui permet de réduire de plus de 12 % la quantité d'eau nécessaire à la réalisation d'un béton. Un superplastifiant présente une action fluidifiante puisque, pour une même quantité d'eau, l'ouvrabilité du béton est augmentée en présence du superplastifiant.

Par l'expression « superplastifiant à efficacité immédiate », on entend selon la présente invention un superplastifiant dont l'action fluidifiante maximale à 20°C est obtenue généralement dans les quinze premières minutes suivant le contact initial du superplastifiant avec le liant hydraulique pour des dosages usuels.

Par l'expression « superplastifiant à efficacité différée », on entend selon la présente invention un superplastifiant dont l'action fluidifiante croît dans le temps au moins sur une partie de la fenêtre d'ouvrabilité recherchée de la composition hydraulique de façon que l'action fluidifiante maximale à 20°C du superplastifiant soit obtenue au moins plus de quinze minutes après le contact initial du superplastifiant avec le liant hydraulique. L'action fluidifiante du superplastifiant à efficacité immédiate et du superplastifiant à efficacité différée est mesurée par une mesure d'étalement et/ou d'affaissement, par exemple selon la norme EN 12350-2 « Essais pour béton frais-Partie 2 : Essai d'affaissement ».

L'action fluidifiante du superplastifiant est maximale lorsque l'étalement/l'affaissement mesuré de la composition hydraulique ne comprenant que ce superplastifiant est maximal.

L'augmentation de l'action fluidifiante du superplastifiant peut être obtenue par une augmentation de la capacité du superplastifiant à être adsorbé par les composants minéraux (notamment les grains de ciments) de la composition hydraulique. Dans ce but, une possibilité consiste à augmenter la densité de charges anioniques du superplastifiant. Une augmentation de la densité de charges du superplastifiant peut être obtenue par deux phénomènes différents qui peuvent se produire simultanément:

- l'augmentation du nombre de charges portées par le polymère ; et
- la réduction du poids moléculaire du polymère.

La réduction du poids moléculaire du superplastifiant peut être obtenue en prévoyant un superplastifiant comprenant une chaîne principale et des chaînes pendantes (au moins trois) reliées à la chaîne principale et qui peuvent se détacher de la chaîne principale lorsque le superplastifiant est dans la composition hydraulique.

La séparation de chaînes pendantes et/ou l'augmentation du nombre de charges portées par le superplastifiant peut être obtenue en prévoyant un superplastifiant comprenant des fonctions chimiques hydrolysables qui, sous l'effet des ions hydroxyde ($OH^-$) dans la composition hydraulique, peuvent se transformer pour fournir des fonctions carboxylate $COO^-$. Les fonctions chimiques hydrolysables sont par exemple les anhydrides, les esters et les amides. On appelle polymère hydrolysable un polymère comprenant des fonctions chimiques hydrolysables dans les conditions de basicité et dans la fenêtre d'ouvrabilité de la composition hydraulique.

Des impuretés, par exemple les argiles, contenues dans les sables et/ou les additions minérales sont connues pour entraîner des fluctuations de propriétés des compositions hydrauliques comprenant seulement un superplastifiant à efficacité immédiate du type polycarboxylate de polyoxyde d'alkylène. En particulier, une chute de l'affaissement initial ou de l'étalement initial est généralement observée par rapport à une composition hydraulique ne comprenant pas d'impuretés.

Selon le document WO 98/58887, l'adsorption du superplastifiant à efficacité immédiate par des argiles gonflantes de type 2 : 1 présentes dans les sables est à l'origine de cette baisse d'efficacité. Le document WO 98/58887 prévoit l'utilisation d'agents modifiant l'activité de l'argile, par exemple en diminuant sa capacité d'adsorption ou en réalisant une pré-adsorption de l'argile.

Les inventeurs ont mis en évidence que lorsqu'un mélange fluidifiant comportant un superplastifiant à efficacité immédiate et un superplastifiant à efficacité différée est utilisé dans une composition hydraulique comportant des impuretés, notamment des argiles, une réduction de la diminution de l'affaissement/étalement initial est observée. En revanche, l'affaissement/étalement tend à diminuer dans le temps contrairement à ce qui est observé en l'absence d'impuretés. Des agents inertants peuvent être utilisés de façon classique lorsqu'une diminution de l'affaissement/étalement initial d'une composition hydraulique comprenant un superplastifiant à efficacité immédiate est observée. Toutefois, les inventeurs ont mis en évidence par de nombreux essais que, de façon surprenante, l'utilisation des agents inertants permet également d'éviter la diminution dans le temps de l'affaissement/étalement d'une composition hydraulique comprenant un superplastifiant à efficacité immédiate et un superplastifiant à efficacité différée pour laquelle l'affaissement/étalement initial est convenable.

Une explication possible serait que, lorsqu'un mélange fluidifiant comportant un superplastifiant à efficacité immédiate et un superplastifiant à efficacité différée est utilisé, c'est le superplastifiant à efficacité différée qui serait adsorbé de façon privilégiée par les argiles et non pas le superplastifiant à efficacité immédiate. L'absence de diminution ou la faible diminution de l'affaissement/étalement initial serait due au fait que la concentration du superplastifiant à efficacité immédiate n'est pas ou peu modifiée. En outre, la diminution indésirable de l'affaissement/étalement qui se produit par la suite serait due au fait qu'une partie du superplastifiant à efficacité différée est adsorbée par les impuretés. Les agents inertants sont utilisés de façon classique lorsqu'une diminution de l'affaissement/étalement initial d'une composition hydraulique comprenant un superplastifiant à efficacité immédiate est observée. Toutefois, les inventeurs ont mis en évidence que, de façon surprenante, ces agents inertants permettaient également d'éviter l'adsorption des superplastifiants à efficacité différée par les impuretés bien que la structure initiale des superplastifiant à efficacité différée soit différente de celle des superplastifiants à efficacité immédiate.

La présente invention se rapporte également à un liant hydraulique comprenant un mélange fluidifiant tel que défini précédemment. La présente invention se rapporte également à une composition hydraulique comprenant un liant hydraulique tel que défini précédemment et des granulats.

<u>Superplastifiant à efficacité immédiate ou premier superplastifiant</u>

Le premier superplastifiant peut être tout superplastifiant à efficacité immédiate utilisé de façon classique dans l'industrie, par exemple ceux définis dans la norme européenne EN 934-2.

On pourra utiliser, comme premier superplastifiant, des superplastifiants qui sont du type polyphosphonate polyox ou polysulfonate polyox ou de type polycarboxylate de polyoxyde d'alkylène (également appelés polycarboxylate polyox ou PCP). Un exemple de premier superplastifiant est celui décrit dans les documents EP-A-537872, US20030127026 et US20040149174.

Un exemple de premier superplastifiant correspond à un copolymère comprenant au moins une unité de formule (I)

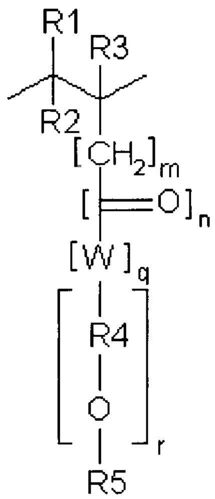

(I)

et au moins une unité de formule (II)

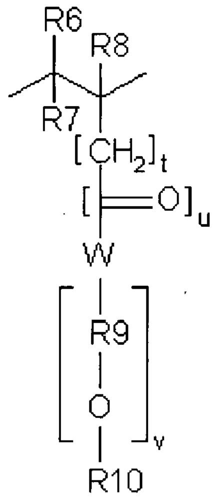

(II)

où R1, R2, R3, R6, R7 et R8 sont indépendamment un atome d'hydrogène, un radical alkyle linéaire ou ramifié en $C_1$ à $C_{20}$, ou un radical aromatique, ou un radical-COOR11 avec R11 représentant indépendamment un atome d'hydrogène, un radical alkyle linéaire ou ramifié en $C_1$ à $C_4$, un cation monovalent, divalent ou trivalent ou un groupe ammonium;

R10 est un atome d'hydrogène, un radical alkyle linéaire ou ramifié en $C_1$ à $C_{20}$, ou un radical aromatique ;

R4 et R9 sont indépendamment un radical alkyle linéaire ou ramifié en $C_2$ à $C_{20}$;

R5 est un atome d'hydrogène, un groupe alkyle en $C_1$ à $C_{20}$ ou un groupe anionique ou cationique, par exemple un groupe phosphonate, un groupe sulfonate, un groupe carboxylate, etc. ;

W est un atome d'oxygène ou d'azote ou un radical NH;

m et t sont indépendamment des nombres entiers compris de 0 à 2;

n et u sont indépendamment des nombres entiers égaux à 0 ou 1;

q est un nombre entier égal à 0 ou 1 ;

r et v sont indépendamment des nombres entiers compris de 0 à 500;

et la masse molaire dudit copolymère est comprise de 10 000 à 400 000 daltons.

De préférence, le radical R1 ou R6 est un atome d'hydrogène. De préférence, le radical R2 ou R7 est un atome d'hydrogène. De préférence, le radical R3 ou R8 est un radical méthyle ou hydrogène. De préférence, le radical R4 ou R9 est un radical éthyle.

De préférence, le copolymère utilisé selon l'invention ou un de ses sels possède un nombre entier r de 1 à 300, de préférence de 20 à 250, plus préférentiellement de 40 à 200, encore plus préférentiellement de 40 à 150.

Le superplastifiant peut correspondre à un sel du copolymère défini précédemment.

Le copolymère peut comprendre plusieurs unités différentes selon la formule (I) ayant, notamment, des radicaux R5 différents.

Un exemple de premier superplastifiant est celui obtenu par polymérisation:

- d'au moins un monomère ionique du type phosphonique, sulfonique ou carboxylique, de préférence carboxylique et avantageusement de type (méth)acrylique ; et
- d'au moins un monomère de type (méth)acrylate de polyoxyalkylène glycol (de $C_1$ à $C_4$), par exemple de type (méth)acrylate de polyéthylène glycol (PEG), dont le poids moléculaire est compris par exemple de 100 à 10000, de préférence de 500 à 7500 et avantageusement de 750 à 5000.

Le ratio molaire premier monomère/second monomère peut varier beaucoup, par exemple 90 : 10 à 45 : 55, de préférence 80 : 20 à 55:45.

Il est possible d'utiliser un ou plusieurs tiers monomère(s), par exemple ceux choisis de :

(a) type acrylamide, par exemple N,N-diméthylacrylamide, 2,2'-diméthylamino (méth)acrylate ou ses sels, 2,2'-diméthylaminoalkyle (méth)acrylate ou ses sels avec le groupe alkyl et en particulier éthyle et propyle, et généralement tout monomère comprenant une fonction de type amine ou amide ;
(b) type hydrophobe, par exemple (méth)acrylate d'alkyle en $C_1$ à $C_{18}$, en particulier méthyle ou éthyle.

La quantité de ce tiers monomère peut varier de 5 à 25 % mol du total des monomères.

Le premier superplastifiant se présente sous une forme pouvant varier de la forme liquide à la forme solide, en passant par la forme cireuse.

Le dosage du premier superplastifiant par rapport au liant hydraulique varie en général de 0,1 à 5 % en masse (pourcentage calculés à partir de l'extrait sec du premier superplastifiant), de préférence de 0,1 à 2 % en masse par rapport à la masse du liant hydraulique. Lorsque le premier superplastifiant est liquide, la quantité du premier plastifiant est de préférence de 1 à 10, de préférence de 2 à 7 litre par mètre cube du béton frais.

Le premier superplastifiant peut correspondre à un mélange de superplastifiants à efficacité immédiate, à un mélange d'au moins un superplastifiant à efficacité immédiate et d'un plastifiant, par exemple un lignosulfonate, ou à un mélange d'au moins un superplastifiant à efficacité immédiate et d'une molécule du type gluconate.

<u>Superplastifiant à efficacité différée ou second superplastifiant</u>

Le second superplastifiant est un superplastifiant dont l'action fluidifiante croît au moins temporairement dans le temps dans les conditions de basicité et dans la fenêtre d'ouvrabilité de la composition hydraulique. De préférence, le second superplastifiant n'a pas initialement d'action fluidifiante, c'est-à-dire que l'affaissement/étalement initial de la composition hydraulique (à moins de 5 minutes après le mélange des composants de la composition hydraulique) ne varie pas quelle que soit la concentration du superplastifiant à efficacité différée.

Selon un exemple de réalisation de la présente invention, la densité de sites d'adsorption du second superplastifiant augmente dans la fenêtre d'ouvrabilité de la composition hydraulique.

Selon un exemple de réalisation de la présente invention, l'anionicité du second superplastifiant augmente dans la composition hydraulique dans la fenêtre d'ouvrabilité.

Le second superplastifiant peut comprendre au moins un polymère hydrolysable dans les conditions de basicité et dans la fenêtre d'ouvrabilité de la composition hydraulique. La composition hydraulique obtenue lors de la fabrication d'un béton selon l'invention ayant un pH basique, des réactions d'hydrolyse se produisent qui entraînent une modification de la structure du polymère hydrolysable et à une modification des propriétés du polymère hydrolysable, en particulier une augmentation de l'action fluidifiante du polymère hydrolysable. Selon un exemple de réalisation, le polymère hydrolysable est du type polycarboxylate de polyoxyde d'alkylène.

Des exemples de superplastifiants à efficacité différée sont décrits dans les documents EP 1 136 508, WO 2007/047407 et US 2009/0312460.

Un exemple de second superplastifiant correspond à un copolymère comprenant au moins une unité selon la formule (I) et au moins une unité selon la formule (II).

Par rapport à la masse du liant hydraulique final, la quantité du second superplastifiant varie de 0,01 à 1 %,

de préférence de 0,05 à 0,5 % en masse (pourcentage calculés à partir de l'extrait sec du second superplastifiant) par rapport à la masse du liant hydraulique.

Le second superplastifiant peut correspondre à un mélange de superplastifiants à efficacité différée.

Agent inertant

Le mélange pour composition hydraulique selon l'invention peut comprendre au moins un agent inertant. Selon un exemple de réalisation, le mélange pour composition hydraulique peut comprendre un agent inertant particulièrement efficace pour inerter les argiles gonflantes et un agent inertant particulièrement efficace pour inerter les argiles non gonflantes.

Selon un exemple de réalisation de l'invention, l'agent inertant pour argiles gonflantes est un polymère cationique hydrosoluble ayant une cationicité supérieure à 0,5 meq/g, de préférence supérieure à 1 meq/g, et plus préférentiellement supérieure à 2 meq/g.

Selon un exemple de réalisation de l'invention, le polymère cationique a une viscosité intrinsèque inférieure à 1 dl/g, de préférence inférieure à 0,8 dl/g, et plus préférentiellement inférieure à 0,6 dl/g.

Les polymères cationiques peuvent avoir une structure linéaire, peigne ou ramifiée. De préférence, ils ont une structure linéaire.

Les groupes cationiques des polymères cationiques peuvent être notamment des groupes phosphonium, pyridinium, sulfonium et amine quaternaire, ces derniers étant préférés. Ces groupes cationiques peuvent être situés dans la chaîne principale du polymère cationique ou comme groupe pendant.

Les polymères cationiques correspondent, par exemple, aux polymères cationiques décrits dans la demande de brevet WO2006032785.

Le polymère cationique peut être obtenu directement par un procédé de polymérisation connu, tel que la polymérisation radicalaire ou la polycondensation.

Il peut également être préparé par modification post-synthétique d'un polymère, par exemple par greffage de groupements portant au moins une fonction cationique sur une chaîne polymérique portant des groupes réactifs appropriés.

La polymérisation est réalisée à partir d'au moins un monomère portant un groupe cationique ou un précurseur adapté.

Les polymères cationiques obtenus à partir de monomères portant des groupes amine et imine sont particulièrement utiles. L'azote peut être quaternisé après polymérisation de manière connue, par exemple par alkylation à l'aide d'un composé alkylant, par exemple par du chlorure de méthyle, ou en milieu acide, par protonation.

Les polymères cationiques contenant des groupes cationiques d'amine quaternaire sont particulièrement appropriés.

Parmi les monomères portant déjà une fonction amine quaternaire cationique, on peut citer notamment les sels de diallyldialkyl ammonium, les (meth)acrylates de dialkylaminoalkyl quaternisés, et les (meth)acrylamides N-substitués par un dialkylaminoalkyl quaternisé.

La polymérisation peut être réalisée avec des monomères non ioniques, de préférence à chaîne courte, comportant 2 à 6 atomes de carbone. Des monomères anioniques peuvent également être présents puisqu'ils n'affectent pas les groupements cationiques.

Dans le cadre de la modification de polymères par greffage, les polymères naturels greffés, par exemple les amidons cationiques, peuvent être cités.

Avantageusement, le polymère cationique contient des groupes dont le caractère cationique n'apparaît qu'en milieu acide. Les groupes amines tertiaires, cationiques par protonation en milieu acide, sont particulièrement préférés. L'absence de caractère ionique dans les compositions hydrauliques de type béton ou mortier présentant un pH alcalin permet d'améliorer leur robustesse vis-à-vis d'autres composés ioniques, notamment anioniques.

A titre d'exemple, des polymères cationiques de la famille des polyvinylamines peuvent être cités, lesquels peuvent être obtenus par polymérisation de N-vinylformamide, suivie d'une hydrolyse. Les polyvinylamines quaternisés peuvent être préparés comme cela est décrit dans le brevet US 5,292,441. Sont également appropriés les polymères de type polyéthylèneimine. Ces derniers sont quaternisés par protonation.

Les polymères cationiques obtenus par polycondensation d'épichlorhydrine avec une mono- ou dialkylamine, notamment la méthylamine ou diméthylamine sont particulièrement préférés. Leur préparation a été décrite par exemple dans les brevets US 3,738,945 et US 3,725,312.

L'unité du polymère cationique obtenue par polycondensation de diméthylamine et d'épichlorhydrine peut être représentée comme suit :

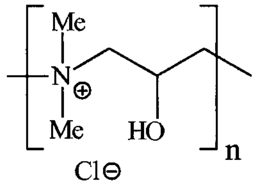

Les polymères de type polyacrylamide modifiés par réaction de Mannich sont également appropriés, par exemple le polyacrylamide N-substitué par un groupe diméthylaminométhyle.

Les polymères cationiques obtenus par polycondensation de dicyandiamide et de formaldéhyde sont également appropriés. Ces polymères et leur procédé de production sont décrits dans le brevet FR 1 042 084.

Selon un mode de réalisation préféré, le polymère cationique est susceptible d'être obtenu par condensation de dicyandiamide avec du formol en présence de:

A) un polyalkylène glycol; et/ou
B) un polycarboxylate polyalkoxylé; et/ou
C) un dérivé ammonium.

La constitution chimique précise du polymère cationique ainsi obtenu n'est pas connue avec précision. Il sera donc décrit ci-après essentiellement par son procédé de préparation.

L'agent inertant peut correspondre à un mélange d'agents inertants différents.

<u>Procédé de préparation de l'agent inertant pour argiles gonflantes</u>

L'agent inertant est susceptible d'être obtenu par condensation du dicyandiamide avec du formol, éventuellement en présence d'autres composés, notamment d'un polyalkylène glycol (A), d'un polycarboxylate polyalkoxylé (B) et/ou d'un agent de quaternisation (C).

La réaction de condensation entre le dicyandiamide et le formol requiert 2 moles de formol pour 1 mole de dicyandiamide, selon le schéma réactionnel (1) possible suivant :

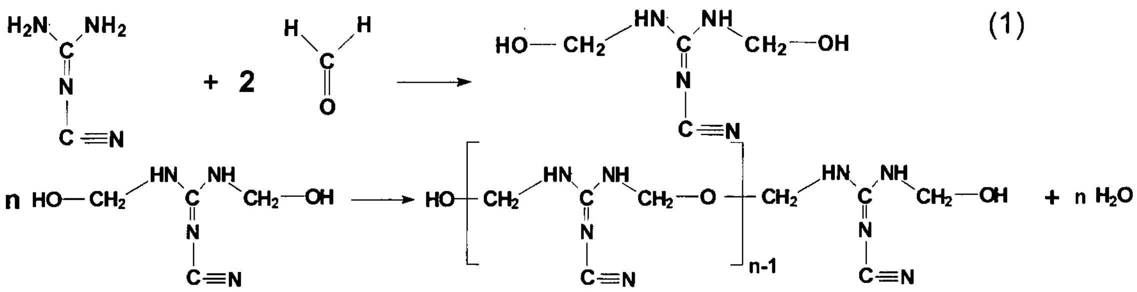

(1)

Ainsi, le ratio molaire entre formol et dicyandiamide est de préférence situé dans la plage de 0,8: 1 à 4 : 1, en particulier de 1 : 1 à 3 : 1. Un excès molaire supérieur à 4 n'apporte pas d'avantage supplémentaire, mais peut entraîner une prise en masse indésirable.

Il est particulièrement préféré de réaliser la réaction en léger excès stoechiométrique de formol, avec un ratio molaire entre formol et dicyandiamide situé dans la plage de 2,2 : 1 à 2,8 : 1.

De préférence, l'agent inertant pour argiles gonflantes est obtenu par condensation de formol avec dicyandiamide en présence de composés additionnels. En effet, cela permet d'ajuster les propriétés de l'agent inertant, notamment sa solubilité dans l'eau et son affinité pour les argiles gonflantes.

Le polyalkylène glycol (composé A) est de préférence un composé de formule (III) :

$$R12\text{-}O\text{-}[R13\text{-}O]_n\text{-}R14 \qquad \text{(III)}$$

dans laquelle :

R13 est un groupe alkyle en $C_1$ à $C_4$, de préférence un groupe éthyle et/ou propyle;
R12 et R14 sont indépendamment l'un de l'autre un atome d'hydrogène ou un groupe alkyle en $C_1$ à $C_4$, de préférence un groupe méthyle ; et

n est un nombre de 25 à 1000.

A titre d'exemple, le composé A peut être le polyéthylène glycol, le polypropylène glycol, un copolymère oxyde d'éthylène/oxyde de propylène ou un mélange de ces différents composés. De préférence, il s'agit de polyéthylène glycol.
Le poids moléculaire du composé A va de préférence de 1000 à 35000.
Il a été mis en évidence par des mesures de viscosité que la présence du composé A modifie la structure de l'agent inertant formé ainsi que ses performances.
La quantité de composé A utilisé dans la réaction le cas échéant peut être inférieure à celle des réactants principaux dicyandiamide et formol.
Ainsi, le mélange réactionnel contient généralement 0 à 10 %, de préférence 0,5 à 3 %, et plus préférentiellement de 0,8 à 1 % en poids de composé A.
Le composé B est un PCP tel que défini précédemment en relation avec les formules (I) et (II).
Avantageusement, le mélange réactionnel contient 0,1 à 10 %, de préférence 0,5 à 5 %, et plus préférentiellement de 0,5 à 2 % en poids de composé B.
Le dérivé ammonium (composé C) a pour fonction principale d'augmenter le caractère ionique du polymère en apportant des fonctions cationiques. Le caractère ionique du polymère contribue grandement à sa solubilité dans l'eau et à son affinité pour les argiles gonflantes, et est donc avantageux en vue de l'application ciblée.
De préférence, l'ion ammonium du dérivé ammonium est de formule (IV) suivante:

$$NH(R15)_3^+ \quad (IV)$$

dans laquelle

les groupements R15 sont identiques ou différents et correspondent à l'hydrogène ou à un groupement alkyle en $C_1$ à $C_6$.

Parmi les dérivés ammonium appropriés, on peut citer notamment les halogénures d'ammonium, par exemple le chlorure d'ammonium, le bromure d'ammonium et l'iodure d'ammonium, le sulfate d'ammonium, l'acétate d'ammonium, le formiate d'ammonium, le nitrate d'ammonium, le phosphate d'ammonium. Le formiate d'ammonium est préféré.
La quantité de composé C utilisée peut beaucoup varier. Toutefois, le ratio molaire entre le composé C et la dicyandiamide est de préférence de 1 à 1,5 et plus préférentiellement de 1,1 à 1,3. Typiquement, le mélange réactionnel contient 1 à 10 %, de préférence 3 à 8 %, et plus préférentiellement de 6 à 8 % en masse de composé C.
La réaction de condensation a lieu dans un solvant approprié, l'eau étant tout particulièrement préférée.
La quantité de solvant dans le mélange réactionnel est choisie pour obtenir la solubilisation des différents composants. Le mélange réactionnel peut comprendre de 10 à 80 % en masse, de préférence de 20 à 70 % en masse de solvant.
Généralement, il est préférable de limiter la quantité d'eau dans le mélange réactionnel, afin de déplacer l'équilibre de la réaction de condensation vers le produit souhaité. Il est avantageux d'ajouter le complément d'eau après la réaction lorsque l'on souhaite un produit dilué.
Il peut être intéressant d'ajouter d'autres adjuvants classiques dans les polymérisations, par exemple des agents de terminaison moléculaire. Ces composés permettent de contrôler la taille des molécules synthétisées et donc leur masse molaire et d'en diminuer ainsi l'indice de polydispersité. L'acide sulfamique est un exemple d'agent de terminaison approprié.
La réaction de condensation se déroule rapidement, généralement en l'espace de 30 minutes à 4 heures environ. La vitesse de la réaction dépend de la température, laquelle peut être comprise entre la température ambiante et le point d'ébullition du mélange réactionnel. De préférence, elle varie de 20 à 95°C, de préférence de 60 à 70°C. Le temps de réaction est plus long à plus basse température. Il est toutefois indésirable de maintenir une température élevée de façon prolongée, car cela peut entraîner la dégradation du produit.
Avantageusement, le polymère cationique est utilisé directement à l'issue de la réaction, sans purification préalable. Il peut donc contenir d'autres produits que le polymère cationique attendu selon le schéma réactionnel (1) indiqué ci-dessus.
L'agent inertant pour argiles non gonflantes peut comprendre une molécule organique, ayant une densité de charges cationiques strictement inférieure à 0,5 meq/g et comprendre au moins deux atomes, chacun étant capable de former au moins une liaison hydrogène.
De préférence, l'agent inertant pour argiles non gonflantes est hydrosoluble.
L'agent inertant pour argiles non gonflantes peut être une molécule organique non chargée.
Selon un exemple de réalisation de l'invention, l'agent inertant pour argiles non gonflantes est un polymère ayant un poids moléculaire inférieur à 1000000 g/mol, de préférence inférieur à 500000 g/mol, plus préférentiellement

inférieur à 100000 g/mol, encore plus préférentiellement inférieur à 50000 g/mol.

L'agent inertant pour argiles non gonflantes peut comprendre au moins dix, de préférence au moins 50, plus préférentiellement au moins 100 atomes, chacun étant capable de former au moins une liaison hydrogène.

L'agent inertant pour argiles non gonflantes peut être un polymère ou un copolymère comprenant au moins un monomère ayant au moins un atome capable de former au moins une liaison hydrogène.

Selon un exemple de réalisation de l'invention, l'agent inertant pour argiles non gonflantes est choisi parmi le groupe comprenant un oxyalkylène (par exemple l'éthylène glycol et/ou le propylène glycol ou PEG), un éther en couronne, un alcool polyvinylique, un gluconate, un heptagluconate, un acide heptagluconique, un acide gluconique, un polysaccharide notamment la cellulose ou la chitine, la dextrine, les dérivés de cellulose, le chitosan, les alginates, l'hémicellulose, la pectine, les polyols ou les protéines ou un mélange de ces composés.

L'agent inertant pour argiles non gonflantes peut comprendre des fonctions hydroxyle. De préférence, l'agent inertant pour argiles non gonflantes est un alcool polyvinylique ou PVA. A titre d'exemple, le PVA est obtenu par hydrolyse partielle d'un polymère polyacétate de vinyle.

Selon un exemple de réalisation de l'invention, l'agent inertant pour argiles non gonflantes est obtenu par une étape de polymérisation d'au moins un monomère vinyl acétate ou d'un composé analogue et une étape d'hydrolyse, le taux d'hydrolyse de la molécule organique étant inférieur à 95 %, de préférence inférieur à 94 %, plus préférentiellement inférieur à 93 %.

Par rapport à la masse du liant hydraulique final, la quantité de l'agent inertant est comprise de 0,01 à 5 %, de préférence de 0,05 à 3 % en masse (pourcentage calculé à partir de l'extrait sec de l'agent inertant) par rapport à la masse du liant hydraulique.

La quantité de l'agent inertant dans la composition hydraulique est, selon un exemple de réalisation de l'invention, comprise de 4 à 15 % en masse d'extraits sec d'agent inertant par rapport à la masse sèche d'argiles dans la composition hydraulique, de préférence de 6 à 10 % en masse d'extraits sec d'agent inertant par rapport à la masse sèche d'argiles.

La quantité d'argiles dans la composition hydraulique est, selon un exemple de réalisation de l'invention, comprise de 0,5 à 5 % en masse d'argiles secs par rapport à la masse de sable sec. La quantité d'argiles dans la composition hydraulique est, selon un exemple de réalisation de l'invention, comprise de 1 à 50 kg d'argiles secs par mètre cube de béton frais.

<u>Liant et composition hydraulique</u>

La présente invention se rapporte également à un liant hydraulique comprenant un mélange fluidifiant tel que défini précédemment.

De préférence, le liant hydraulique est un ciment.

Le liant hydraulique destiné à former une composition hydraulique, notamment un béton humide, comprend en général, par rapport à la masse du liant sec:

- 99,5 à 90 % de ciment, par exemple un ciment Portland;
- 0,5 à 10 % du mélange fluidifiant.

Avantageusement, le liant comprend:

- 99 à 95 % de ciment, par exemple un ciment Portland;
- 1 à 5 % du mélange fluidifiant.

Le ciment Portland est conforme aux familles de ciment décrites dans la norme européenne EN 197-1. Par exemple, un ciment CEM1 52.5 N ou R, CEM2 de type 32.5, 32.5 R, 42.5 ou 42.5 R peut être utilisé. Le ciment peut être du type HRI (à Haute Résistance Initiale).

La présente invention se rapporte également à une composition hydraulique comprenant un liant hydraulique tel que défini précédemment et des granulats.

De préférence, la composition hydraulique selon l'invention est un coulis de ciment, un mortier ou un béton.

Le béton peut, en plus du mélange fluidifiant, contenir d'autres types d'adjuvants couramment utilisés dans les bétons.

A titre d'exemple d'adjuvants susceptibles d'être utilisés, on peut citer: entraîneurs d'air, agents anti-mousse, inhibiteurs de corrosion, agents de réduction du retrait, fibres, pigments, agents de modification de la rhéologie, précurseurs d'hydratation, agents d'aide à la pompabilité, agents réducteurs d'alcalis réactions, agents de renforcement, composés hydrofugeants, accélérateurs, retardateurs et leurs mélanges.

Un autre objet selon l'invention est un procédé de fabrication d'une composition hydraulique selon l'invention

comprenant une étape de mise en contact entre le mélange fluidifiant, une eau de gâchage et un liant hydraulique.

Les composants qui constituent le mélange fluidifiant peuvent être mélangés avant la mise en contact entre le mélange fluidifiant, l'eau de gâchage et le liant hydraulique. A titre de variante, les composants qui constituent le mélange fluidifiant peuvent être mis en contact avec l'eau de gâchage et le liant hydraulique indépendamment les uns des autres.

Selon un exemple de réalisation du procédé selon l'invention, les composants de la composition hydraulique peuvent être utilisés en ajoutant la totalité des composants du mélange fluidifiant dès le départ, lors du malaxage du béton dans la centrale à béton; on gâche le ciment et le mélange fluidifiant complet, en particulier l'agent inertant, le premier superplastifiant et le second superplastifiant. Le malaxage dans la centrale à béton peut être fait soit dans un malaxeur fixe, soit dans un camion toupie lorsque celui-ci est utilisé directement comme malaxeur. L'invention se rapporte donc également au procédé dans lequel la totalité des composants est introduite au moment du malaxage du liant hydraulique avec les granulats et l'eau.

De préférence, le mélange fluidifiant utilisé dans le procédé selon l'invention est sous forme de solution, d'émulsion, de suspension, de poudre ou immobilisé sur un support.

De préférence, l'étape de mise en contact du procédé selon l'invention est réalisée selon l'une des manières suivantes:

- le mélange fluidifiant est ajouté en même temps que et/ou dans l'eau de gâchage ;
- le mélange fluidifiant est ajouté directement à au moins l'un des composants de la composition hydraulique avant ajout de l'eau de gâchage;
- le mélange fluidifiant est ajouté au cours du gâchage; et
- le mélange fluidifiant est ajouté à la composition hydraulique, de préférence au moment du coulage de la composition hydraulique.

De préférence, les composants de la composition hydraulique auxquels le mélange fluidifiant peut être ajouté sont des granulats, des fibres, un liant hydraulique, du laitier, des fumées de silice, des cendres volantes, des fillers calcaires ou siliceux, des pouzzolanes, des adjuvants, etc.

Avantageusement, quand le mélange fluidifiant est ajouté au cours du gâchage, il peut être ajouté au début, au milieu ou à la fin dudit gâchage. Il peut même être envisagé d'ajouter le mélange fluidifiant en dernier, juste avant l'arrêt du malaxeur dans lequel les composants sont mélangés.

Le mélange fluidifiant utilisé dans le procédé selon l'invention a les mêmes caractéristiques que le mélange fluidifiant utilisé dans le liant hydraulique selon l'invention ou la composition hydraulique selon l'invention.

La composition hydraulique comprend des granulats classiques (sables, graviers et/ou cailloux). Préférentiellement, les constituants de la composition finale ont une taille inférieure ou égale à 20 mm. La composition peut ainsi être pompée facilement.

Un autre objet selon l'invention est un élément pour le domaine de la construction réalisé en utilisant un liant hydraulique selon l'invention ou une composition hydraulique selon l'invention, tels que décrits ci-avant.

<u>Installation de production d'une composition hydraulique</u>

La présente invention se rapporte également à une installation de production de la composition hydraulique décrite précédemment. L'installation comprend au moins:

- un moyen de fourniture de l'agent inertant ;
- un moyen de fourniture du premier superplastifiant ;
- un moyen de fourniture du second superplastifiant ;
- un moyen de fourniture d'au moins un paramètre ; et
- un processeur adapté à commander indépendamment le moyen de fourniture de l'agent inertant, le moyen de fourniture du premier superplastifiant et le moyen de fourniture d'au moins un paramètre en fonction de la valeur dudit paramètre physique de la composition hydraulique et/ou un paramètre physique du procédé de production de la composition hydraulique.

L'installation selon l'invention permet de façon avantageuse d'adapter la composition du mélange fluidifiant en fonction de la valeur mesurée du paramètre physique.

Selon un exemple de réalisation, le moyen de fourniture du paramètre physique est un capteur de température.

L'invention sera décrite plus en détail au moyen des exemples suivants, donnés à titre non limitatif, en relation avec les figures parmi lesquelles :

la figure 1 représente, de façon schématique, un exemple d'installation de fabrication de béton selon l'invention ;

la figure 2 représente l'évolution de l'étalement d'un mortier comprenant un mélange fluidifiant classique et l'évolution de l'étalement d'un mortier comprenant un mélange fluidifiant selon un premier exemple de réalisation de l'invention ; et

la figure 3 représente l'évolution de l'étalement d'un mortier comprenant un mélange fluidifiant selon le premier exemple de réalisation de l'invention et l'évolution de l'étalement d'un mortier comprenant un mélange fluidifiant selon un troisième exemple de réalisation de l'invention.

La figure 1 représente, de façon schématique, un exemple de réalisation d'une installation de production 10 de béton. Seuls les éléments nécessaires à la compréhension de l'invention ont été décrits. L'installation de production 10 comprend par exemple des moyens de stockage ou de fourniture 12A à 12E des composants de la composition hydraulique. A titre d'exemple, dans le cas où la composition hydraulique est du béton, l'installation 10 peut comprendre au moins un silo de stockage d'au moins un type de ciment 12A (Ciment) et au moins un silo de stockage 12B (Granulats) d'au moins un type de granulats. L'installation 10 comprend une cuve de stockage 12C, 12D et 12E pour chaque composé du mélange fluidifiant. L'agent inertant (ou un mélange d'agents inertants) est stocké dans la cuve de stockage 12C (IN), par exemple sous forme liquide. Le superplastifiant à efficacité immédiate (ou un mélange de superplastifiants à efficacité immédiate, ou un mélange d'au moins un superplastifiant à efficacité immédiate et d'un plastifiant, ou un mélange d'au moins un superplastifiant à efficacité immédiate et d'une molécule du type gluconate) est stocké dans la cuve de stockage 12D (SP), par exemple sous forme liquide. Le superplastifiant à efficacité différée (ou un mélange de superplastifiants à efficacité différée) est stocké dans la cuve de stockage 12E (DED), par exemple sous forme liquide. D'autres cuves peuvent être prévues, chaque cuve contenant un adjuvant ou un mélange d'adjuvants d'un type particulier, par exemple, des entraîneurs d'air, des agents antimousse, des accélérateurs, des retardateurs, des pigments, des inhibiteurs de corrosion, des agents de modification de viscosité, etc.

L'installation 10 comprend un dispositif de mélange 14 (Mixer) et des moyens de convoyage 16A à 16E reliant chaque moyen de stockage 12A à 12E au dispositif de mélange 14. Le dispositif de mélange 14 peut correspondre à un mélangeur dédié, comme dans une centrale à béton ou correspondre au tambour d'un camion-toupie. L'installation comprend, en outre, un moyen 18 de fourniture d'eau au dispositif de mélange 14.

L'installation 10 comprend un processeur 20 (CPU) adapté à commander les moyens de stockage 12A à 12E, les moyens de convoyage 16A à 16E, le dispositif de mélange 14 et le moyen de fourniture d'eau 18. Le processeur 20 est relié à une interface 22 (I).

Le processeur 20 peut être relié à un capteur 24 d'un paramètre physique (T). A titre d'exemple, le capteur 24 est un capteur de température 24 (T) et/ou un capteur d'humidité, notamment d'humidité absorbée par les granulats. Le processeur 20 peut être relié à plusieurs capteurs. Le processeur 20 est adapté à commander le transport d'une quantité donnée du composant stocké dans chaque moyen de stockage 12A à 12E jusqu'au dispositif de mélange 14 en fonction de la composition de béton à réaliser.

Selon un exemple de réalisation de l'invention, le processeur 20 comprend une mémoire, non représentée, dans laquelle sont stockées différentes formulations de béton. Chaque formulation comprend, par exemple, la quantité de chaque composant (ciment, granulats, agent inertant, superplastifiant à efficacité immédiate et superplastifiant à efficacité différée, eau) à prévoir pour réaliser 1 $m^3$ de béton.

Selon un exemple de réalisation de l'invention, le processeur 20 est adapté à déterminer une formulation de béton à partir d'au moins un paramètre fourni par un opérateur par l'intermédiaire de l'interface 22 et/ou fournis par le capteur 24. Les paramètres sont, par exemple, des paramètres de performances souhaités du béton choisis parmi la résistance à la flexion, la résistance à la compression, l'affaissement/l'étalement, le temps de prise ou la teneur en air. Les paramètres peuvent préciser des caractéristiques du béton, par exemple le type et/ou la quantité d'au moins un composant du béton, notamment le ciment, le type de granulat, l'origine du ciment, l'origine des granulats, la composition du ciment, la composition des granulats, le type d'impuretés des composants, les rapports entre des composants du béton notamment, le rapport eau/ciment. Les paramètres peuvent en outre comprendre la température et le taux d'humidité des granulats.

Selon un exemple de réalisation de l'invention, le processeur 20 peut adapter les quantités des composants à utiliser en fonction de la valeur des paramètres fournis par l'interface et/ou le capteur 24. En particulier, le processeur 20 peut adapter les quantités de l'agent inertant, du superplastifiant à efficacité immédiate et du superplastifiant à efficacité différée.

## EXEMPLES

Mesure de la cationicité d'un polymère cationique

La cationicité ou densité de charges cationiques (en meq/g) représente la quantité de charges (en mmol) portée par 1 g de polymère. Cette propriété est mesurée par titration colloïdale par un polymère anionique en présence d'un

indicateur coloré sensible à l'ionicité du polymère en excès.

Dans les exemples ci-après, la cationicité a été déterminée de la manière suivante. Les éléments suivants ont été introduits dans un récipient adapté:

- 60 ml d'une solution tampon de phosphate de sodium à 0,001 M - pH 6 ; et
- 1 ml de solution de bleu d'o-toluidine à 4,1 x $10^{-4}$ M ; puis
- 0,5 ml de solution de polymère cationique à doser.

Cette solution a été titrée avec une solution de polyvinylsulfate de potassium jusqu'à virage de l'indicateur.

La cationicité a été obtenue par la relation suivante :

$$\text{Cationicité (meq/g)} = (V_{epvsk} * N_{pvsk}) / (V_{pc} * C_{pc})$$

Dans laquelle:

$V_{pc}$ est le volume de solution du polymère cationique;
$C_{pc}$ est la concentration de polymère cationique en solution;
$V_{epvsk}$ est le volume de solution de polyvinylsulfate de potassium ; et
$N_{pvsk}$ est la normalité de la solution de polyvinylsulfate de potassium.

<u>Mesure de la viscosité intrinsèque d'un polymère cationique</u>

Les mesures de viscosité intrinsèque des polymères cationiques ont été réalisées dans une solution NaCl 3 M, avec un viscosimètre capillaire de type Ubbelhode, à 25°C.

Le temps d'écoulement a été mesuré dans le tube capillaire entre 2 repères pour le solvant et des solutions du polymère à différentes concentrations. La viscosité spécifique a été obtenue pour chaque concentration, en divisant la différence entre les temps d'écoulement de la solution de polymère et du solvant, par le temps d'écoulement du solvant. La viscosité réduite a été calculée en divisant la viscosité spécifique par la concentration de la solution de polymère. En traçant la droite de la viscosité réduite en fonction de la concentration de la solution de polymère, une droite a été obtenue. L'intersection avec l'ordonnée de cette droite correspondait à la viscosité intrinsèque pour une concentration égale à zéro.

Cette valeur a été corrélée au poids moléculaire moyen d'un polymère.

<u>Procédé de fabrication du superplastifiant à efficacité différée</u>

Les composés suivants ont été pesés dans un ballon tétracol de 2000 mL:

- 557 g d'eau déminéralisée ;
- 4,0 g d'acide acrylique (fournisseur : Aldrich) ; et
- 409,5 g d'acrylate de méthoxypoly(éthylène glycol) de masse 1100 g/mol (fournisseur: NK ester).

Le montage réactionnel a été adapté avec agitation mécanique, sonde de température, entrée d'azote et réfrigérant. Un bain d'huile chauffé a été installé sous le ballon et la température a été consignée à 85°C. La circulation d'eau de réfrigération, le bullage d'azote et l'agitation du milieu ont été également débutés. Une fois la température de consigne atteinte, 1,0 g d'acide thioglycolique (fournisseur : Aldrich) a été ajouté, suivi de l'ajout de 5,77 g de Vazo 68 (fournisseur : Dupont) ce qui correspondait au temps zéro de la polymérisation. Le milieu réactionnel a été laissé à réagir 2 h à 85°C avant retrait du bain de chauffe. Une fois à température ambiante, 11,0 g de NaOH à 50 % ont été ajoutés au milieu réactionnel ainsi que de l'eau déminéralisée. La solution de polymères a été utilisée en l'état après détermination de sa valeur de résidu sec.

<u>Formulation du mortier</u>

Tableau 1 - Formulation du mortier

| Constituant | Masse (g) |
|---|---|
| Ciment | 480 |
| Filler calcaire Betocarb | 359 |
| Sable PE2LS | 200 |
| Sable normalisé | 1350 |
| Eau de pré-mouillage | 100 |
| Eau de gâchage | 227 |
| Adjuvants | Selon exemples |

Le ciment était un ciment de type CEM II 42.5N CE CP2 NF (provenance Le Teil-usine Lafarge).

Le matériau de remplissage (filler) était un matériau calcaire (Bétocarb d'Erbray qui comprend environ 90 % en masse de passant au tamis de 100 μm) (fournisseur : OMYA).

Le sable normalisé était un sable siliceux conforme à la norme EN 196.1 (fournisseur : Société Nouvelle du Littoral).

Le sable PE2LS était un sable siliceux de diamètre inférieur ou égal à 0,315 mm (fournisseur : Fulchiron).

Les adjuvants comprenaient au moins un superplastifiant à efficacité immédiate et un superplastifiant à efficacité différée et éventuellement un agent inertant.

Les sables pouvaient comprendre des argiles.

Protocole de préparation du mortier:

Un mortier de composition indiquée dans le tableau 1 a été préparé dans le bol d'un malaxeur Perrier.

Les sables, puis l'eau de pré-mouillage ont été ajoutés en agitant à faible vitesse (140 tr/min), puis laissés au repos pendant 4 minutes avant d'introduire les liants (ciment et filler). Le malaxage a repris pendant 1 minute à petite vitesse puis l'eau de gâchage additionnée des adjuvants ont été ajoutés en 30 secondes. Enfin, le malaxage a continué encore 2 minutes à 280 tr/min. Le mortier a été réalisé à une température constante de 20°C et une humidité relative de 70 %.

Mesure de l'étalement

L'étalement d'un mortier a été mesuré à 20°C grâce à un mini cône d'Abrams dont le volume était de 800 mL. Les dimensions du cône étaient les suivantes:

- diamètre du cercle de la base supérieure : 50 +/- 0,5 mm ;
- diamètre du cercle de la base inférieure : 100 +/- 0,5 mm ; et
- hauteur : 150 +/- 0,5 mm.

Le cône a été posé sur une plaque de verre séchée et rempli de mortier frais. Il a ensuite été arasé. La levée du cône a provoqué un affaissement du mortier sur la plaque de verre. Le diamètre du disque obtenue a été mesuré en millimètres +/- 5 mm. C'est l'étalement du mortier.

EXEMPLE 1

Un mortier M1 selon la formulation du tableau 1 a été réalisé en utilisant seulement un superplastifiant à efficacité immédiate SP. Le superplastifiant à efficacité immédiate SP correspondait au produit commercialisé sous l'appellation OPT220 par la société Chryso.

Un mortier M2 selon la formulation du tableau 1 a été réalisé en utilisant seulement un superplastifiant à efficacité différé DED. Le superplastifiant à efficacité différé DED était le polymère du type PCP obtenu par le procédé décrit précédemment.

Un mortier M3 selon la formulation du tableau 1 a été réalisé en utilisant un mélange fluidifiant comprenant le superplastifiant à efficacité immédiate SP OPT220 et le superplastifiant à efficacité différé DED.

Un mortier M4 selon la formulation du tableau 1 a été réalisé en utilisant seulement un agent inertant IN. L'agent inertant utilisé était une polyamine épichlorhydrine - diméthylamine, ayant une cationicité de 7,3 meq/g et une viscosité

intrinsèque de 0,04 dl/g (FL2250 ; extrait sec : 54,5 % en masse ; fournisseur : SNF).

Un mortier M5 selon la formulation du tableau 1 a été réalisé en utilisant un mélange fluidifiant comprenant le superplastifiant à efficacité immédiate SP et l'agent inertant IN.

Un mortier M6 selon la formulation du tableau 1 a été réalisé en utilisant un mélange fluidifiant comprenant le superplastifiant à efficacité immédiate SP, le superplastifiant à efficacité différé DED et l'agent inertant IN.

Les concentrations des composants du mélange fluidifiant dans les mortiers M1 à M6 sont indiquées dans le tableau 2 ci-après.

Tableau 2

| Mortier | Dosage du superplastifiant à efficacité immédiate, SP (% masse polymère sec/masse ciment) | Dosage du superplastifiant à efficacité différée, DED (% masse polymère sec/masse ciment) | Dosage de l'agent inertant IN (% masse polymère sec/masse ciment) |
|---|---|---|---|
| M1 | 0,14% | - | - |
| M2 | - | 0,30 % | - |
| M3 | 0,14% | 0,10 % | - |
| M4 | - | - | 0,10 % |
| M5 | 0,14% | - | 0,10 % |
| M6 | 0,14% | 0,10 % | 0,10 % |

L'étalement à 5 minutes de chaque mortier M1 à M6 a été mesuré. Les résultats sont rassemblés dans le tableau 3 ci-dessous.

Tableau 3

| | M1 | M2 | M3 | M4 | M5 | M6 |
|---|---|---|---|---|---|---|
| Etalement à 5 min (mm) | 200 | 100 | 335 | 100 | 345 | 360 |

Pour le mortier M1 ne comprenant que le superplastifiant à efficacité immédiate SP, l'étalement à 5 minutes était de 200 mm.

Pour le mortier M2 ne comprenant que le superplastifiant à efficacité différée DED, l'étalement à 5 minutes était de 100 mm, ce qui tend à montrer, comme cela est souhaité, que le superplastifiant à efficacité différée DED, même avec un dosage élevé, n'avait pas d'action fluidifiante initiale.

Pour le mortier M3 comprenant le superplastifiant à efficacité immédiate SP et le superplastifiant à efficacité différée DED, l'étalement à 5 minutes était de 335 mm, c'est-à-dire supérieur à l'étalement à 5 minutes du mortier M1. Ceci tend à prouver que le superplastifiant à efficacité différée DED a servi à inerter au moins partiellement les argiles contenues dans le mortier M3, ce qui a empêché qu'une partie du superplastifiant à efficacité immédiate SP ne soit consommée par les argiles, d'où il a résulté une augmentation de l'étalement à 5 minutes.

Pour le mortier M4 ne comprenant que l'agent inertant IN, l'étalement à 5 minutes était de 100 mm, ce qui a confirmé que l'agent inertant IN n'a pas d'action fluidifiante.

Pour le mortier M5 comprenant le superplastifiant à efficacité immédiate SP et l'agent inertant IN, l'étalement à 5 minutes était de 345 mm, c'est-à-dire supérieur à l'étalement à 5 minutes du mortier M1. Ceci a confirmé la présence d'argiles dans le mortier M5 qui ont été inertés par l'agent inertant IN, ce qui a empêché qu'une partie du superplastifiant à efficacité immédiate SP ne soit consommée par les argiles, d'où il a résulté une augmentation de l'étalement à 5 minutes. Ceci a confirmé en outre qu'au moins une partie du superplastifiant à efficacité différée DED a servi à inerter au moins partiellement les argiles contenues dans le mortier M3. L'étalement à 5 minutes obtenu pour le mortier M5 était légèrement supérieur à l'étalement à 5 minutes obtenu pour le mortier M3, ce qui tend à montrer que l'agent inertant IN était plus efficace pour inerter les argiles que le superplastifiant à action différée DED.

Pour le mortier M6 comprenant le superplastifiant à efficacité immédiate SP, le superplastifiant à efficacité différée DED et l'agent inertant IN, l'étalement à 5 minutes était de 360 mm, c'est-à-dire légèrement supérieur à l'étalement obtenu pour le mortier M5. Les argiles ont été inertées. L'action fluidifiante du superplastifiant à efficacité immédiate SP n'a alors pas été dégradée. En outre, l'étalement à 5 minutes du mortier M6 était plus proche de l'étalement à 5 minutes obtenu pour le mortier M5 que l'étalement à 5 minutes obtenu pour le mortier M3. Une explication serait que l'action d'inertage des argiles a été réalisée pour le mortier M6 par l'agent inertant IN et non par le superplastifiant à efficacité différée DED.

**EXEMPLE 2**

Un mortier M7 selon la formulation du tableau 1 a été réalisé en utilisant un mélange fluidifiant selon un second exemple de réalisation de la présente invention, comprenant le superplastifiant à efficacité immédiate SP, un superplastifiant à efficacité différée DED' et l'agent inertant F12250. Le superplastifiant à efficacité différée DED' correspondait au produit commercialisé sous l'appellation RheoTEC Z-60 par la société BASF. Il s'agit d'un polymère du type PCP.
Les concentrations des composants du mélange fluidifiant dans les mortiers M3, M6 et M7 sont indiquées dans le tableau 4 ci-après.

Tableau 4

| Mortier | Dosage du superplastifiant à efficacité immédiate, SP (% masse polymère sec/masse ciment) | Dosage du superplastifiant à efficacité différée, DED (% masse polymère sec/masse ciment) | Dosage du superplastifiant à efficacité différée, DED' (% masse polymère sec/masse ciment) | Dosage de l'agent inertant IN (% masse polymère sec/masse ciment) |
|---|---|---|---|---|
| M3 | 0,14% | 0,10 % | - | - |
| M6 | 0,14% | 0,10 % | - | 0,10 % |
| M7 | 0,14% | - | 0,10 % | 0,10 % |

L'évolution de l'étalement de chaque mortier M3, M6 et M7 a été mesurée. Les résultats sont rassemblés dans le tableau 5 ci-dessous et sont illustrés en figure 2 dans laquelle la courbe 10 représente l'évolution de l'étalement du mortier M3, la courbe 12 représente l'évolution de l'étalement du mortier M6 et la courbe 14 représente l'évolution de l'étalement du mortier M7.

Tableau 5

| | Etalement à 20°C (mm) | | | |
|---|---|---|---|---|
| | 5 min | 30 min | 60 min | 120 min |
| M3 | 335 | 280 | 260 | 240 |
| M6 | 360 | 320 | 310 | 345 |
| M7 | 360 | 360 | 390 | 375 |

L'étalement a décru de façon continue pour le mortier M3. La contribution fluidifiante du superplastifiant DED était nettement visible après 30 minutes pour le mortier M6 puisqu'une inflexion de la courbe 12 est observée. L'agent inertant IN du mortier M6 a permis au superplastifiant à efficacité différée DED de remplir uniquement sa fonction de fluidifiant. La courbe d'évolution 14 du mortier M7 a sensiblement la même forme générale que la courbe 12. Toutefois, par rapport au mortier M6, le mortier M7 présentait un étalement plus important pendant au moins 2 h 30.

**EXEMPLE 3**

Un mortier M8 selon la formulation du tableau 1 a été réalisé en utilisant un mélange fluidifiant selon le premier exemple de réalisation de la présente invention, comprenant le superplastifiant à efficacité immédiate SP, le superplastifiant à efficacité différée DED et l'agent inertant IN.
Un mortier M9 selon la formulation du tableau 1 a été réalisé en utilisant un mélange fluidifiant selon un troisième exemple de réalisation de la présente invention, comprenant le superplastifiant à efficacité immédiate SP, le superplastifiant à efficacité différée DED et un agent inertant IN'. L'agent inertant IN' correspondait à alcool polyvinylique ayant un taux d'hydrolyse de 75 % et un poids moléculaire de 2000 g/mol (fournisseur : Aldrich).
Les concentrations des composants du mélange fluidifiant dans les mortiers M8 et M9 sont indiquées dans le tableau 6 ci-après.

Tableau 6

| Mortier | Dosage du superplastifiant à efficacité immédiate SP (% masse polymère sec/masse ciment) | Dosage du superplastifiant à efficacité différée DED (% masse polymère sec/masse ciment) | Dosage de l'agent inertant IN (% masse polymère sec/masse ciment) | Dosage de l'agent inertant IN' (% masse polymère sec/masse ciment) |
|---|---|---|---|---|
| M8 | 0,14% | 0,10 % | 0,05 % | - |
| M9 | 0,14% | 0,10 % | - | 0,05 % |

L'évolution de l'étalement de chaque mortier M8 et M9 a été mesurée. Les résultats sont rassemblés dans le tableau 7 ci-dessous et sont illustrés en figure 3 dans laquelle la courbe 16 représente l'évolution de l'étalement du mortier M8 et la courbe 18 représente l'évolution de l'étalement du mortier M9.

Tableau 7

| | Etalement à 20°C (mm) | | | |
|---|---|---|---|---|
| | 5 min | 30 min | 60 min | 120 min |
| M8 | 335 | 300 | 310 | 340 |
| M9 | 360 | 325 | 325 | 360 |

Par rapport au mortier M8, le mortier M9 a présenté un étalement légèrement plus important pendant au moins 2 h 30. En outre, de façon avantageuse, l'agent inertant IN' ne comprend pas de chlore tandis que l'agent inertant IN est utilisé généralement sous la forme d'un sel de chlore et fournit des quantités de chlore qui peuvent être incompatibles avec les normes de fabrication de béton. De façon générale, les courbes 16 et 18 illustrent le fait que l'inertage des effets nocifs de l'argile sur le superplastifiant à efficacité différée est obtenu indépendamment de la nature chimique de l'agent inertant.

**Revendications**

**1.** Mélange pour composition hydraulique, comprenant au moins :

- un agent inertant adapté à neutraliser au moins partiellement les effets nocifs d'impuretés de la composition hydraulique sur l'ouvrabilité de la composition hydraulique ;
- un premier superplastifiant différent de l'agent inertant ; et
- un second superplastifiant différent du premier superplastifiant et de l'agent inertant et ayant une action fluidifiante maximale à 20°C se produisant après l'action fluidifiante maximale à 20°C du premier superplastifiant.

**2.** Mélange selon la revendication 1, dans lequel la densité de sites d'adsorption du second superplastifiant augmente dans la fenêtre d'ouvrabilité de la composition hydraulique.

**3.** Mélange selon la revendication 1 ou 2, dans lequel l'agent inertant correspond à un polymère cationique présentant une densité de charges cationiques supérieure à 0,5 meq/g et une viscosité intrinsèque inférieure à 1 dl/g.

**4.** Mélange selon la revendication 3, dans lequel le polymère cationique présente une densité de charges cationiques supérieure à 2 meq/g.

**5.** Mélange selon la revendication 3 ou 4, dans lequel le polymère cationique présente une viscosité intrinsèque inférieure à 0,6 dl/g.

**6.** Mélange selon l'une quelconque des revendications 1 à 5, dans lequel l'agent inertant est un polymère d'alcool vinylique.

**7.** Mélange selon l'une quelconque des revendications 1 à 6, dans lequel le second superplastifiant est du type polycarboxylate de polyoxyde d'alkylène.

**8.** Mélange selon l'une quelconque des revendications 1 à 7, dans lequel le premier superplastifiant est du type polycarboxylate de polyoxyde d'alkylène.

**9.** Liant hydraulique comprenant:

- du ciment ; et
- un mélange selon l'une quelconque des revendications 1 à 8.

**10.** Composition hydraulique comprenant un liant hydraulique selon la revendication 9 gâché avec des granulats et de l'eau.

**11.** Béton comprenant le mélange selon l'une quelconque des revendications 1 à 8 et d'autres types d'adjuvants.

**12.** Béton selon la revendication 11 comprenant des adjuvants choisi-parmi: entraîneurs d'air, agents anti-mousse, inhibiteurs de corrosion, agents de réduction du retrait, fibres, pigments, agents de modification de la rhéologie, précurseurs d'hydratation, agents d'aide à la pompabilité, agents réducteurs d'alcalis réactions, agents de renforcement, composés hydrofugeants, accélérateurs, retardateurs et leurs mélanges.

**13.** Béton selon la revendication 12 où l'adjuvant est un retardateur.

**14.** Elément pour le domaine de la construction, **caractérisé en ce qu'**il est réalisé en utilisant un liant hydraulique selon la revendication 9 ou une composition hydraulique selon la revendication 10.

**15.** Installation (10) de production de la composition hydraulique selon la revendication 10, comprenant au moins:

- un moyen (16C) de fourniture de l'agent inertant;
- un moyen (16D) de fourniture du premier superplastifiant;
- un moyen (16E) de fourniture du second superplastifant;
- un moyen (24) de fourniture d'au moins un paramètre ; et
- un processeur (20) adapté à commander indépendamment le moyen de fourniture de l'agent inertant, le moyen de fourniture du premier superplastifiant et le moyen de fourniture d'au moins un paramètre en fonction de la valeur dudit paramètre physique de la composition hydraulique et/ou un paramètre physique du procédé de production de la composition hydraulique.

**16.** Installation selon la revendication 15, dans lequel le moyen (24) de fourniture du paramètre physique est un capteur de température.

## Patentansprüche

**1.** Gemisch für eine hydraulische Zusammensetzung, umfassend mindestens:

- ein Inertisierungsmittel, das geeignet ist, die schädlichen Auswirkungen von Verunreinigungen der hydraulischen Zusammensetzung auf die Verarbeitbarkeit der hydraulischen Zusammensetzung wenigstens teilweise zu neutralisieren;
- ein erstes Superplastifizierungsmittel, das von dem Inertisierungsmittel verschieden ist, und
- ein zweites Superplastifizierungsmittel, das von dem ersten Superplastifizierungsmittel und dem Inertisierungsmittel verschieden ist und eine maximale verflüssigende Wirkung bei 20 °C besitzt, die nach der maximalen verflüssigenden Wirkung bei 20 °C des ersten Superplastifizierungsmittels auftritt.

**2.** Gemisch nach Anspruch 1, wobei sich die Dichte der Adsorptionsstellen des zweiten Superplastifizierungsmittels im Fenster der Verarbeitbarkeit der hydraulischen Zusammensetzung erhöht.

**3.** Gemisch nach Anspruch 1 oder 2, wobei das Inertisierungsmittel einem kationischen Polymer entspricht, das eine kationische Ladungsdichte von mehr als 0,5 meq/g und eine Grenzviskosität von weniger als 1 dl/g aufweist.

**4.** Gemisch nach Anspruch 3, wobei das kationische Polymer eine kationische Ladungsdichte von mehr als 2 meq/g aufweist.

5. Gemisch nach Anspruch 3 oder 4, wobei das kationische Polymer eine Grenzviskosität von weniger als 0,6 dl/g aufweist.

6. Gemisch nach einem der Ansprüche 1 bis 5, wobei das Inertisierungsmittel ein Vinylalkoholpolymer ist.

7. Gemisch nach einem der Ansprüche 1 bis 6, wobei das zweite Superplastifizierungsmittel von dem Typ des Polyalkylenoxid-Polycarboxylats ist.

8. Gemisch nach einem der Ansprüche 1 bis 7, wobei das erste Superplastifizierungsmittel von dem Typ des Polyalkylenoxid-Polycarboxylats ist.

9. Hydraulisches Bindemittel, umfassend:

- Zement und
- ein Gemisch nach einem der Ansprüche 1 bis 8.

10. Hydraulische Zusammensetzung, umfassend ein hydraulisches Bindemittel nach Anspruch 9, das mit Granulat und Wasser angemacht ist.

11. Beton, umfassend das Gemisch nach einem der Ansprüche 1 bis 8 und andere Arten von Zusatzmitteln.

12. Beton nach Anspruch 11, umfassend Zusatzmittel, die ausgewählt sind aus: luftporenbildenden Mitteln, Antischaummitteln, Korrosionsinhibitoren, schrumpfmindernden Mitteln, Fasern, Pigmenten, Rheologie-Modifikationsmitteln, Vorläuferstoffen der Hydratation, Mitteln zur Verbesserung der Pumpbarkeit, Reduktionsmitteln der Alkalireaktion, Verstärkungsmitteln, wasserabweisenden Verbindungen, Beschleunigern, Verzögerern und Gemischen davon.

13. Beton nach Anspruch 12, wobei das Zusatzmittel ein Verzögerer ist.

14. Element für den Baubereich, **dadurch gekennzeichnet, dass** es unter Verwendung eines hydraulischen Bindemittels nach Anspruch 9 oder einer hydraulischen Zusammensetzung nach Anspruch 10 hergestellt ist.

15. Anlage (10) zur Erzeugung der hydraulischen Zusammensetzung nach Anspruch 10, umfassend mindestens:

- ein Mittel (16C) zur Zuführung des Inertisierungsmittels;
- ein Mittel (16D) zur Zuführung des ersten Superplastifizierungsmittels;
- ein Mittel (16E) zur Zuführung des zweiten Superplastifizierungsmittels;
- ein Mittel (24) zum Bereitstellen von mindestens einem Parameter und
- einen Prozessor (20), der geeignet ist, das Mittel zur Zuführung des Inertisierungsmittels, das Mittel zur Zuführung des ersten Superplastifizierungsmittels und das Mittel zum Bereitstellen von mindestens einem Parameter in Abhängigkeit von dem Wert des physikalischen Parameters der hydraulischen Zusammensetzung und/oder von einem physikalischen Parameter des Verfahrens zur Herstellung der hydraulischen Zusammensetzung unabhängig zu steuern.

16. Anlage nach Anspruch 15, wobei das Mittel (24) zum Bereitstellen des physischen Parameters ein Temperatursensor ist.

## Claims

1. Mixture for a hydraulic composition, comprising at least:

- an inerting agent adapted to at least partially neutralise the harmful effects of impurities of the hydraulic composition on the workability of the hydraulic composition;
- a first superplasticiser that is different from the inerting agent; and
- a second superplasticiser that is different from the first superplasticiser and from the inerting agent and having a maximum fluidising effect at 20°C that occurs after the maximum fluidising effect at 20°C of the first superplasticiser.

2. Mixture according to claim 1, wherein the density of adsorption sites of the second superplasticiser increases in the workability window of the hydraulic composition.

3. Mixture according to claim 1 or 2, wherein the inerting agent corresponds to a cationic polymer having a cationic charge density of greater than 0.5 meq/g and an intrinsic viscosity of less than 1 dl/g.

4. Mixture according to claim 3, wherein the cationic polymer has a cationic charge density of greater than 2 meq/g.

5. Mixture according to claim 3 or 4, wherein the cationic polymer has an intrinsic viscosity of less than 0.6 dl/g.

6. Mixture according to any one of claims 1 to 5, wherein the inerting agent is a vinyl alcohol polymer.

7. Mixture according to any one of claims 1 to 6, wherein the second superplasticiser is of the alkylene polyoxide polycarboxylate type.

8. Mixture according to any one of claims 1 to 7, wherein the first superplasticiser is of the alkylene polyoxide polycarboxylate type.

9. Hydraulic binder, comprising:

- cement; and
- a mixture according to any one of claims 1 to 8.

10. Hydraulic composition comprising a hydraulic binder according to claim 9 blended with aggregate and water.

11. Concrete comprising the mixture according to any one of claims 1 to 8 and other types of additives.

12. Concrete according to claim 11, comprising additives selected from among: air entraining agents, anti-foams agents, corrosion inhibitors, shrinkage reducers, fibres, pigments, rheology modifiers agents, hydration precursors, pumping aids, alkaline reactivity reducers, reinforcers agents, water-repellent compounds, accelerators, retarders and mixtures thereof.

13. Concrete according to claim 12 wherein the additive is a retarder.

14. Element for the construction field, **characterised in that** it is produced using a hydraulic binder according to claim 9 or a hydraulic composition according to claim 10.

15. Installation (10) for producing the hydraulic composition according to claim 10, comprising at least:

- a means (16C) for supplying the inerting agent;
- a means (16D) for supplying the first superplasticiser;
- a means (16E) for supplying the second superplasticiser;
- a means (24) for supplying at least one parameter; and
- a processor (20) adapted to control independently the means for supplying the inerting agent, the means for supplying the first superplasticiser and the means for supplying at least one parameter as a function of the value of said physical parameter of the hydraulic composition and/or a physical parameter of the method for producing the hydraulic composition.

16. Installation according to claim 15, wherein the means (24) for supplying the physical parameter is a temperature sensor.

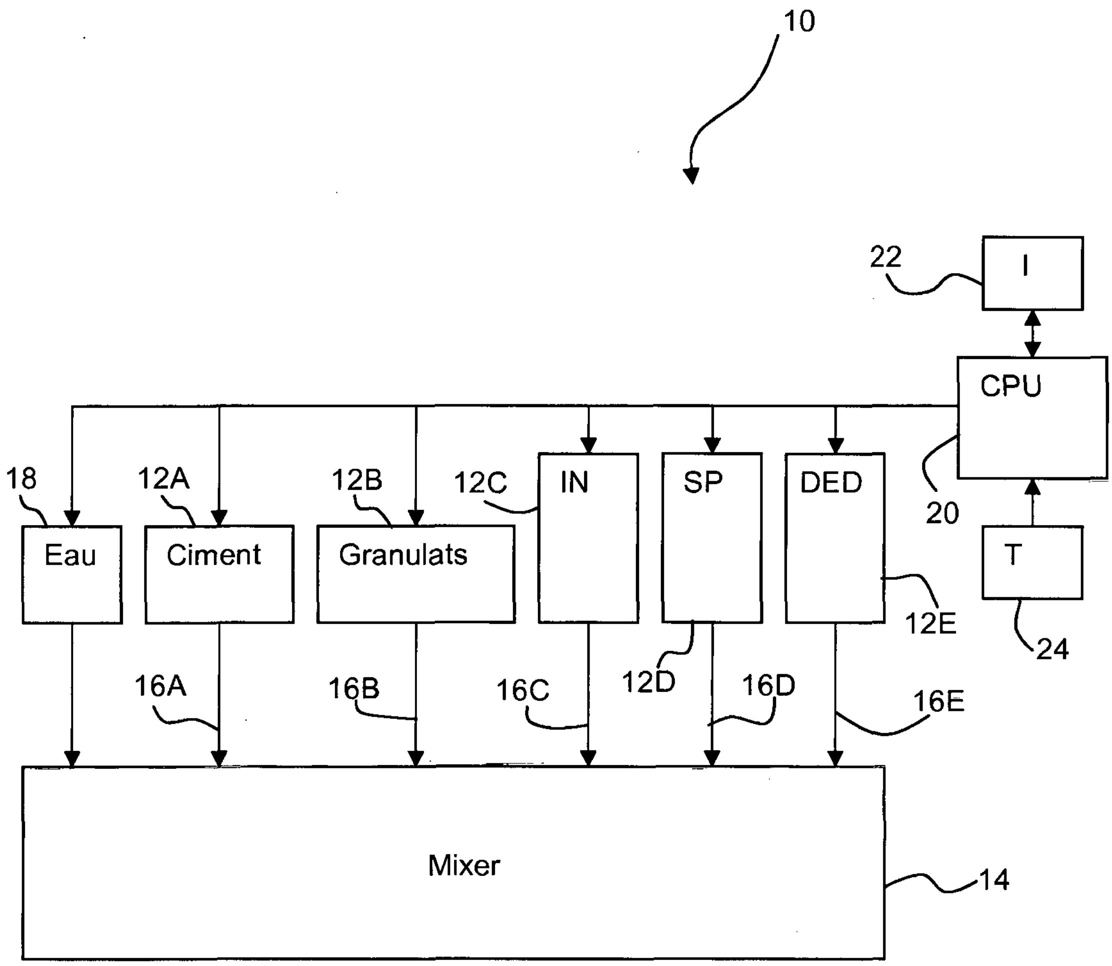
10
22
I
CPU
18
12A
12B
12C
IN
SP
DED
20
Eau
Ciment
Granulats
T
12E
24
16A
16B
16C
12D
16D
16E
Mixer
14

Figure 1

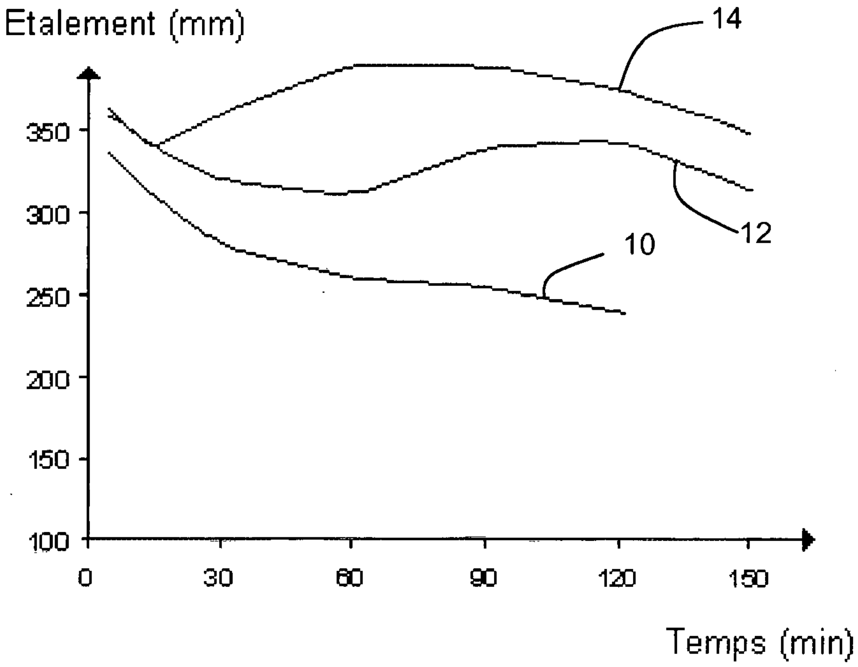


Figure 2

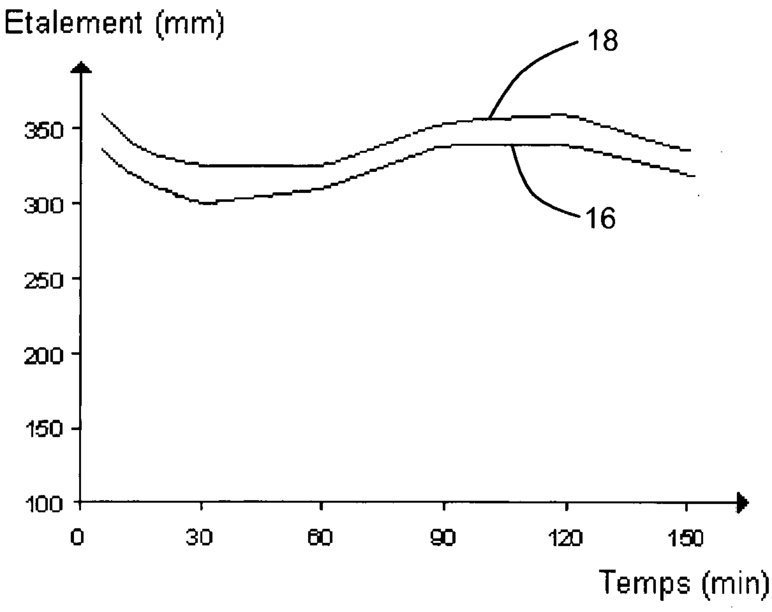


Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9858887 A
- EP 537872 A
- US 20030127026 A
- US 20040149174 A
- EP 1136508 A
- WO 2007047407 A
- US 20090312460 A
- WO 2006032785 A
- US 5292441 A
- US 3738945 A
- US 3725312 A
- FR 1042084